# EUROPEAN PATENT SPECIFICATION

(11) **EP 3 714 614 B1**
(45) Date of publication and mention of the grant of the patent: **19.04.2023**
(21) Application number: 18882014.6
(22) Date of filing: 02.08.2018
(51) Int. Cl.: H04W 92/12, H04W 48/14, H04W 88/08, H04W 88/12, H04W 74/00, H04W 74/08

(54) **INFORMATION TRANSMISSION METHOD AND APPARATUS, AND NETWORK DEVICE**
INFORMATIONSÜBERTRAGUNGSVERFAHREN UND -EINRICHTUNG UND NETZWERKVORRICHTUNG
PROCÉDÉ ET APPAREIL DE TRANSMISSION D'INFORMATIONS ET DISPOSITIF RÉSEAU

(30) Priority: 27.11.2017 US 201762590995 P
(43) Date of publication of application: 30.09.2020
(73) Proprietor: GUANGDONG OPPO MOBILE TELECOMMUNICATIONS CORP., LTD., Wusha, Chang'an Dongguan, Guangdong 523860 (CN)
(72) Inventor: LEI, Yixue, Dongguan Guangdong 523860 (CN)
(74) Representative: Rossi, Ugo
(86) International application number: PCT/CN2018/098262
(87) International publication number: WO 2019/100745

(56) References cited:
- CN-A- 106 792 998
- CN-A- 107 135 502
- CN-A- 107 360 557
- SAMSUNG ET AL: "On-demand SI support in high layer functional split", 3GPP DRAFT; R3-172250, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG3, no. Qingdao; 20170627 - 20170629 20 June 2017 (2017-06-20), XP051307942, Retrieved from the Internet: URL:http://www.3gpp.org/ftp/tsg_ran/WG3_Iu /TSGR3_AHGs/R3_AH_NR_1706/Docs/ [retrieved on 2017-06-20]
- LG ELECTRONICS INC ET AL: "Issues on system information management function", 3GPP DRAFT; R3-174376 ISSUES ON SYSTEM INFORMATION MANAGEMENT FUNCTION, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; , vol. RAN WG3, no. Reno, NV, USA; 20171127 - 20171201 18 November 2017 (2017-11-18), XP051373327, Retrieved from the Internet: URL:http://www.3gpp.org/ftp/tsg%5Fran/WG3% 5FIu/TSGR3%5F98/Docs/ [retrieved on 2017-11-18]
- INTEL CORPORATION: "On SI request and delivery over F1", 3GPP DRAFT; R3-173793-F1-SI-V4, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG3, no. Prague, Czech Republic; 20171009 - 20171013 30 September 2017 (2017-09-30), XP051356653, Retrieved from the Internet: URL:http://www.3gpp.org/ftp/tsg_ran/WG3_Iu /TSGR3_97bis/Docs/ [retrieved on 2017-09-30]
- LG ELECTRONICS INC. et al.: "Issues on system information management function", 3GPP TSG-RAN WG3 Meeting #98 R3-174376, 18 November 2017 (2017-11-18), pages 1-3, XP051373327,
- HUAWEI: "Further discussions on system information delivery over Fl", 3GPP TSG-RAN WG3 Meeting #98 R3-174481, 18 November 2017 (2017-11-18), pages 1-2, XP051373377,
- RAN3: "LS on system information broadcast for CU/DU split scenario", 3GPP DRAFT; R2-1712128_R3-174199, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG2, no. Reno, Nevada, USA; 20171127 - 20171201 10 November 2017 (2017-11-10), XP051372903, Retrieved from the Internet: URL:http://www.3gpp.org/ftp/tsg%5Fran/WG2% 5FRL2/TSGR2%5F100/LSin/ [retrieved on 2017-11-10]
- ZTE: "On-demand SI: further consideration on the Msg3 Content", 3GPP DRAFT; R2-1710419 ON-DEMAND SI- FURTHER CONSIDERATION ON THE MSG3 CONTENT, 3RD GENERATION PARTNERSHIP PROJECT (3GPP), MOBILE COMPETENCE CENTRE ; 650, ROUTE DES LUCIOLES ; F-06921 SOPHIA-ANTIPOLIS , vol. RAN WG2, no. Prague, Czech Republic; 20171009 - 20171013 8 October 2017 (2017-10-08), XP051342464, Retrieved from the Internet: URL:http://www.3gpp.org/ftp/Meetings_3GPP_ SYNC/RAN2/Docs/ [retrieved on 2017-10-08]
- MEDIATEK INC: "MSG4 content for on-demand SI request in MSG3-based method", 3GPP DRAFT; R2-1711306 MSG4 CONTENT FOR ON-DEMAND SI REQUEST FOR SI BROADCAST, 3RD GENERATION PARTNERSHIP PROJECT (3GPP), MOBILE COMPETENCE CENTRE ; 650, ROUTE DES LUCIOLES ; F-06921 SOPHIA-ANTIPOLIS , vol. RAN WG2, no. Prague, Czech Republic; 20171009 - 20171013 8 October 2017 (2017-10-08), XP051343300, Retrieved from the Internet: URL:http://www.3gpp.org/ftp/Meetings_3GPP_ SYNC/RAN2/Docs/ [retrieved on 2017-10-08]

## Description

### TECHNICAL FIELD

The disclosure relates to the field of mobile communications, and particularly, to an information transmission method and a network device.

### BACKGROUND

In a long term evolution (LTE) communication system, an evolved NodeB (eNB) configures system information blocks (SIBs) to be broadcasted, and user equipment (UE) receives SIBs after downlink synchronization is done. However, broadcasting too many SIBs would occupy quite a lot of downlink radio resources in both physical downlink control channel (PDCCH) and physical downlink shared channel (PDSCH).

The document SUMSUNG ET AL: "On-demand SI support in high layer functional split" discloses that for on-demand SI, the Msg1-based scheme allows that gNB can be aware of the requested SI based on the received PRACH preamble and/or PRACH resource.

The document LG ELECTRONICS INC ET AL: "Issues on system information management function", discloses that Broadcast Time Interval IE should be included into the system information delivery procedure.

### SUMMARY

A method according to claim 1 and a network device according to claim 9 are provided. Further improvements and embodiments are provided in the dependent claims.

### BRIEF DESCRIPTION OF DRAWINGS

FIG. 1 illustrates a schematic view of an architecture of a communication system according to some implementations of the disclosure.
FIG. 2 illustrates a flow chart of an information transmission method according to some implementations of the disclosure.
FIG. 3 illustrates an interactive flow chart of the information transmission method according to some implementations of the disclosure.
FIG. 4 illustrates a flow chart of another information transmission method according to the embodiments of the present invention.
FIG. 5 illustrates an interactive flow chart of another information transmission method according to some implementations of the disclosure.
FIG. 6 illustrates a block diagram of an information transmission apparatus according to some implementations of the disclosure.
FIG. 7 illustrates a block diagram of another information transmission apparatus according to some implementations of the disclosure.
FIG. 8 illustrates a schematic block diagram of a network device according to some implementations of the disclosure.
FIG. 9 illustrates a schematic block diagram of a chip according to some implementations of the disclosure.
FIG. 10 illustrates a schematic block diagram of a communication system according to some implementations of the disclosure.

### DETAILED DESCRIPTION

The following clearly and completely describes the technical solutions in the implementations of the disclosure with reference to the accompanying drawings in the implementations of the disclosure. Apparently, the described implementations are merely a part rather than all of the implementations of the disclosure.

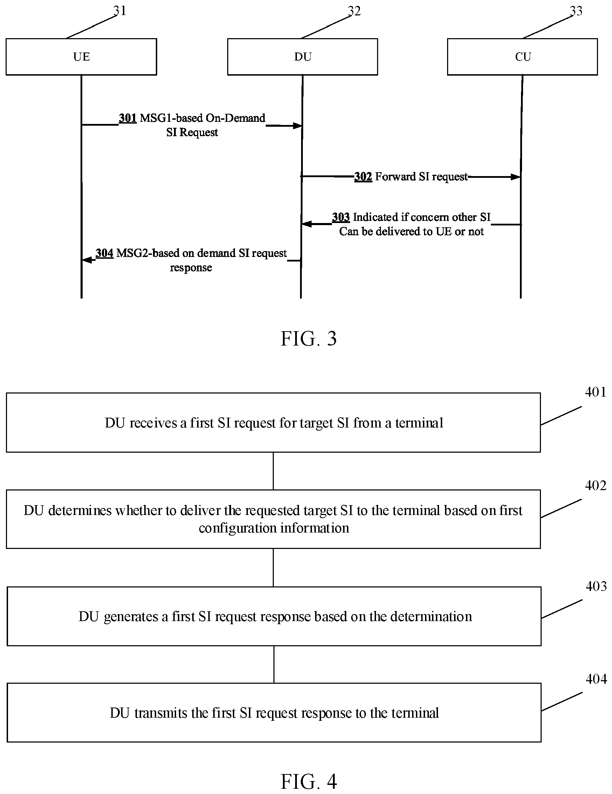

In the following detailed description, embodiments of the invention are described with reference to figure 4 and the associated passages in the description. Other figures and passages are presented for illustrative purposes allowing a better understanding of the invention.

The implementations of the disclosure described below can be applied to various communication systems, for example, the Global System of Mobile communication (GSM) system, the Code Division Multiple Access (CDMA) system, the Wideband Code Division Multiple Access (WCDMA) system, the General Packet Radio Service (GPRS), the Long Term Evolution (LTE) system, LTE Frequency Division Duplex (FDD) system, LTE Time Division Duplex (TDD) system, the Universal Mobile Telecommunication System (UMTS) system, the Worldwide Interoperability for Microwave Access (WiMAX), the 5G system, or the like.

It should be understood that, the terms "system" and "network" in the text can be exchanged. The term "and/or" in the text merely describes associations between associated objects, and it indicates three types of relationships. For example, A and/or B may indicate that A exists alone, A and B coexist, or B exists alone. In addition, the character "/" in the text generally indicates that the associated objects are in an "or" relationship.

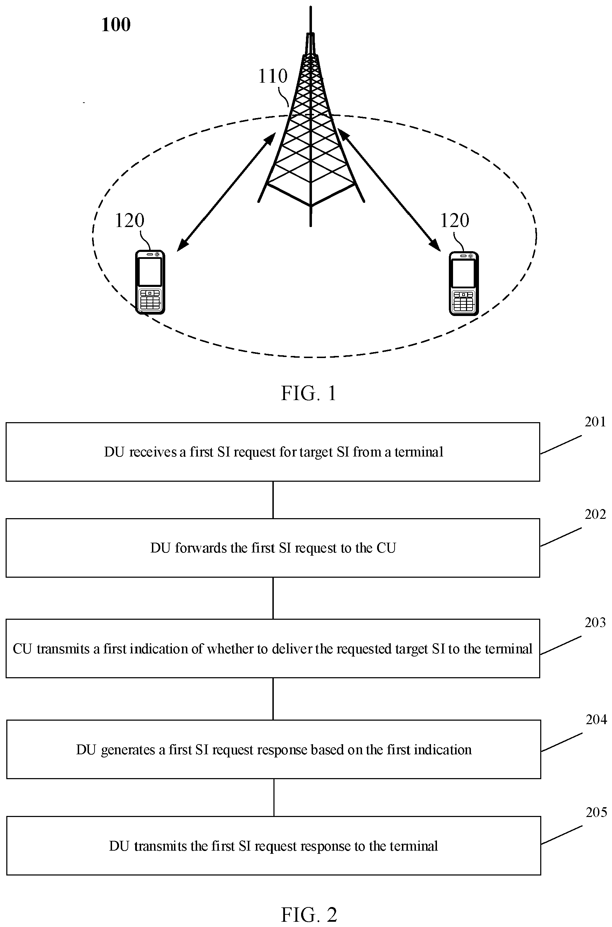

FIG. 1 is a schematic diagram of a communication system 100 applied in an implementation of the disclosure. The wireless communication system 100 may include at least one network device 110. The access network device 100 may be a device communicating with terminal devices 120 ( or called communication terminals, terminals). Each of access network devices 100 may provide communication coverage for a specific geographical area, and may communicate with terminal devices within the coverage. The network device 100 may be a Base Transceiver Station (BTS) in a GSM system or a Code Division Multiple Access (CDMA) system, or a NodeB (NB) in a WCDMA system, or an Evolutional Node B (eNB or eNodeB) in an LTE system, or a radio controller in a Cloud Radio Access Network (CRAN). Alternatively, the network device may be a relay station, an access point, a vehicle-mounted device, a wearable device, a core network device in the 5G network, an network device in a future evolved Public Land Mobile Network (PLMN), or the like.

The communication system 100 further includes multiple terminal devices 120 within the coverage of the network equipment 110. The terminal devices 120 may be mobile or stationary. Each of terminal devices 120 may be an access terminal, a User Equipment (UE), a subscriber unit, a subscriber station, a mobile station, a mobile platform, a remote station, a remote terminal, a mobile device, a user terminal, a terminal, a wireless communication device, a user agent, or a user device. The access terminal may be a cellular phone, a cordless phone, a Session Initiation Protocol (SIP) phone, a Wireless Local Loop (WLL) station, a Personal Digital Assistant (PDA), a handheld device having a wireless communication function, a computing device or any other processing device connected to a wireless modem, a vehicle-mounted device, a wearable device, a terminal device in a future 5G network, a terminal device in a future evolved PLMN, or the like.

The terminal devices 120 may communicate with each other through, for example, device to device (D2D) direct connection.

The 5G system or 5G network may be called a new radio (NR) system or an NR network.

FIG. 1 illustrates a network device and two terminal devices. Of course, it should be understood that the communication system 100 may include multiple network devices 110, and a number of terminal devices under coverage of each of the network devices. The number of the network devices and the number of terminal devices are not limited in the implementations of the disclosure.

The communication system 100 may further include a network controller, a mobile management entity and other network entities, which are not limited here.

As people of ordinary skill in the art can understand, in the implementations of the disclosure, devices having a communication function in the network/system may be called a terminal device. Taking the communication system 100 as illustrated in FIG. 1 as an example, the terminal device may include the network device 110 and the terminal device 120, each having the communication function. The terminal device may further include other devices in the communication system 100, for example, the network controller, the mobile management entity and other network entities, which are not limited here.

In order to avoid broadcasting too many SIBs, which would occupy quite a lot of downlink radio resources in both PDCCH and PDSCH, an on-demand SI mechanism is introduced and different options are being discussed including MSG1-based, MSG-3-based and Dedicated RRC signaling based approaches.

In a next generation NodeB (gNB), when a distributed unit (DU) receives an MSG1-based on-demand SI request, there is ambiguity issue as such. On one hand, the MSG1-based On-Demand SI request is handled in the media access control (MAC) layer and the DU is able to encode the MSG2 as a response (using the Random Access Response (RAR) procedure). From this perspective, the DU can send RAR (MSG2) with the UE without RRC layer involvement. On the other hand, the request is for other SI which is encoded by a Centralized Unit (CU). Thus, the Radio Resource Control (RRC) layer in the DU may be involved.

For an on-demand SI mechanism, the MSG1-based on-demand SI request uses an RACH process and MSG-3-based/Dedicated RRC signaling-based on-demand SI request uses RRC signaling. For a normal full blown gNB without CU/DU (Centralized Unit/Distributed Unit) split, gNB is responsible to handle the on-demand SI request from the UE and produce a response to the UE. However, in the CU/DU case, the packet data convergence protocol (PDCP) and above layers are located in the CU, and the radio link control (RLC) and below layers are located in DU. In such a case, RAN3 has the following agreements in the last RAN3 meeting and LS is sent to RAN2#100:
The gNB-DU is responsible for the encoding of NR-MIB and RMSI message.
The gNB-CU is responsible for the encoding of other SI messages.

It is to be noted that the other SI mentioned in the implementation means system information other than NR-MIB and RMSI, and the other SI includes at least one of SIB 1 to SIB11.

FIG. 2 illustrates a flow chart of an information transmission method according to some implementations of the disclosure. The information transmission method in these implementations can be applied to a base station. The base station may be, but is not limited to a gNB in the 5G system. The base station include a DU and a CU. As illustrated in FIG. 2, the information transmission method may include the following actions illustrated in blocks. The method may begin at block 201.

At block 201, the DU receives a first SI request for target SI from a terminal.

At block 202, the DU forwards the first SI request to the CU.

Specifically, during a random access channel (RACH) procedure, the DU receives a first SI request transmitted by the terminal based on MSG1. In other words, the first SI request may be included in the MSG1. Here, the first SI request transmitted based on MSG1 may be called a MSG1-based on-demand SI request. When the DU receives the first SI request transmitted by the terminal, the DU forwards the first SI request to the CU. The CU decides whether to deliver the requested target SI to the terminal. Here, the target SI is also called other SI, i.e., system information other than NR-MIB and RMSI.

At block 203, upon reception of the first SI request, the CU transmits a first indication of whether to deliver the requested target SI to the terminal.

At block 204, the DU generates a first SI request response based on the first indication; and
At block 205, the DU transmits the first SI request response to the terminal.

Specifically, the first SI request response generated by the DU may be a MAC message. During the RACH procedure, the DU transmits the first SI request response to the terminal in a second message MSG2. Here, the first SI request response transmitted based on MSG2 may be called a MSG2-based on-demand SI request response.

The implementations of the disclosure will be further described in detail in connection with FIG. 3. As illustrated in FIG. 3, when the DU 32 receives 301 the MSG1-based on-demand SI request based on RACH procedure from the UE 31, the DU 32 firstly forwards 302 the request to the CU 33 and then the CU 33 sends 303 the response to DU which indicates if the requested other SI is available to be delivered or not. Then the DU 32 encodes 304 the MAC RAR message to the UE 31. This ensures that the CU is in charge of whether to broadcast the requested other SI message or not.

However, there are additional latency between the CU and the DU and the UE needs to wait the response. If the requested SI is critical for the UE's on-going service i.e. SI related to safety service for V2X or other critical services, such delay is not desired.

FIG. 4 illustrates a flow chart of another information transmission method according to some implementations of the disclosure. The information transmission method in these implementations can be applied to a base station. The base station may be, but is not limited to a gNB in the 5G system. The base station includes a DU and a CU. As illustrated in FIG. 4, the information transmission method may include the following actions illustrated in blocks. The method may begin at block 401.

At block 401, the DU receives a first SI request for target SI from a terminal.

At block 402, the DU determines whether to deliver the requested target SI to the terminal based on first configuration information.

At block 403, the DU generates a first SI request response based on the determination.

Specifically, during the RACH procedure, the DU receives a first SI request transmitted by the terminal based on MSG1. In other words, the first SI request may be included in the MSG1. Here, the first SI request transmitted based on MSG1 may be called a MSG1-based on-demand SI request. Here, when the DU receives the first SI request transmitted by the terminal, the DU does not have to forward the first SI request to the CU. Instead, the DU determines whether to deliver the requested target SI to the terminal based on first configuration information. Here, the first configuration information may be pre-configured configuration information, or configuration information synchronized to the DU from the CU. In this way, upon reception of the first SI request, the DU may immediately determine which target SI can be delivered to the terminal and/or which target SI cannot be delivered to the terminal. Here, the target SI is also called other SI, i.e., system information other than NR-MIB and RMSI.

At block 404, the DU transmits the first SI request response to the terminal.

Specifically, the first SI request response generated by the DU may be a MAC message. During the RACH procedure, the DU transmits the first SI request response to the terminal in a second message MSG2. Here, the first SI request response transmitted based on MSG2 may be called a MSG2-based on-demand SI request response.

In all embodiments of the invention, while the DU transmits the first SI request response to the terminal, the DU forwards the first SI request to the CU. Upon reception of the first SI request, the CU transmits a first indication for indicating whether to deliver the requested target SI to the terminal. In this way, the DU can further ensure the decision of the CU regarding whether to deliver the requested target SI to the terminal is the same as the decision of the DU.

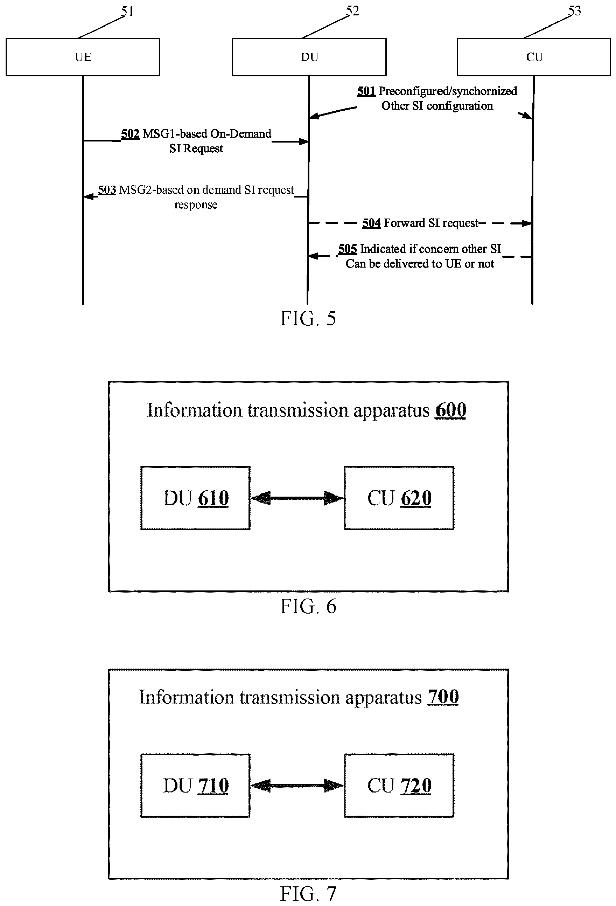

The implementations of the disclosure will be further described in detail in connection with FIG. 5. As illustrated in FIG. 5, when DU 52 receives 502 the MSG1-based on-demand SI request based on RACH procedure from the UE 51, the DU 52 firstly responds 503 to the UE 51 if the requested other SI is to be broadcasted if by pre-configuration the DU already knows which Other SI can be broadcasted thus it does not need to wait for the response from the CU 53. This requires the CU 53 and the DU 52 are synchronized 501 regarding to which other SIs can be broadcasted to the UE 51.

In some implementation, the DU 51 may simultaneously send 504 the RAR to the UE and the CU 53, and the CU 53 informs 505 the DU 51 that certain other SI is to be broadcasted. However, it is to be noted that the method can be performed with or without the operations 504 and 505. In other words, operations 504 and 505 are not necessary for implementing the method.

The implementations described in connection with FIGs. 2 to 5 can solve the problem described in the background section and the implementations described in connections with FIGs, 4 and 5 can reduce the latency for the UE to receive the RAR response, so that UE can be prepared to receive the concerned other SI in the earliest available SI window. In case the increased delay of implementations causes the UE to miss one SI periodicity, the gain would be rather considerable.

The above implementations describe how the MAC and the RRC interact to respond the on-demand SI request. Additionally, the interaction between CU and DU via the F1 interface have been discussed.

FIG. 6 illustrates a block diagram of an information transmission apparatus 600 according to some implementations of the disclosure. As illustrated in FIG. 6, the information transmission apparatus 600 includes a DU 610 and a CU 620.

The DU 610 may be configured to receive first System Information (SI) request for target SI from a terminal, and forward the first SI request to the CU 620.

The CU 620 may be configured to upon reception of the first SI request, transmit a first indication of whether to deliver the requested target SI to the terminal.

The DU 610 may further be configured to generate a first SI request response based on the first indication, and transmit the first SI request response to the terminal.

In an implementation, during a random access channel (RACH) procedure, the DU 610 may be configured to receive the first SI request transmitted by the terminal in a first message MSG1.

In an implementation, the first SI request response generated by the DU may be a Media Access Control (MAC) message.

In an implementation, during an RACH procedure, the DU 610 may be configured to transmit the first SI request response to the terminal in a second message MSG2.

As people of ordinary skill in the art can appreciate, the relevant description of the information transmission apparatus in the above implementations of the disclosure may be understood in light of the relevant description of the information transmission method according to the implementations of the disclosure.

FIG. 7 illustrates a block diagram of another information transmission apparatus 700 according to some implementations of the disclosure. As illustrated in FIG. 7, the information transmission apparatus 700 includes a DU 710.

The DU 710 is configured to receive a first System Information (SI) request for target SI from a terminal, determine whether to deliver the requested target SI to the terminal based on first configuration information, generate a first SI request response based on the determination, and transmit the first SI request response to the terminal.

In an implementation, the first configuration information may be arranged to determine which target SI can be delivered to the terminal, and/or which target SI cannot be delivered to the terminal.

The first configuration information may be pre-configured configuration information, or configuration information synchronized to the DU 710 from the CU 720.

In an implementation, the apparatus may further include a CU 720.

In this implementation, the DU 710 may be configured to forward the first SI request to the CU 720, while transmitting the first SI request response to the terminal. The CU 720 may be configured to, upon reception of the first SI request, transmit a first indication for indicating whether to deliver the requested target SI to the terminal.

In an implementation, during an RACH procedure, the DU 710 is configured to receive a first SI request transmitted by the terminal in a first message MSG1.

In an implementation, the first SI request response generated by the DU may be a MAC message.

In an implementation, during an RACH procedure, the DU 710 may be configured to transmit the first SI request response to the terminal in a second message MSG2.

As people of ordinary skill in the art can appreciate, the relevant description of the information transmission apparatus in the above implementations of the disclosure may be understood in light of the relevant description of the information transmission method according to the implementations of the disclosure.

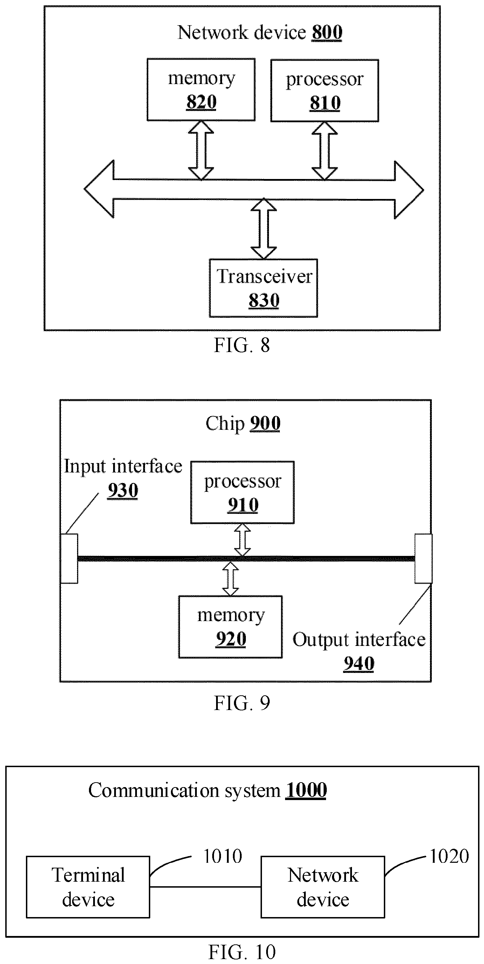

FIG. 8 illustrates a schematic block diagram of a network device 800 according to some implementations of the disclosure. The network device 800 includes a processor 810 and a memory 820. A computer program is stored in the memory 820. The computer program, when executed by the processor 810, causes the processor to implement one of the methods described above. This implementation is not part of the claimed invention.

In an implementation, the memory 820 may be a device independent from the processor 810, or may be integrated in the processor 810. This implementation is not part of the claimed invention.

The network device 800 may include a transceiver 830. The processor 810 may communicate with other device via the transceiver 830, for example, receive information or data from other device, or send information or data to other device. This implementation is not part of the claimed invention.

The transceiver 830 may include a transmitter and a receiver. The transceiver 830 may further include one or more antennae. This implementation is not part of the claimed invention.

The network device 800 may be the network device as described above and configured to implement one of the processes implemented by the network device as described above. The specific processes will not be elaborated herein for simplicity. This implementation is not part of the claimed invention.

FIG. 9 illustrates a schematic block diagram of a chip according to some implementations of the disclosure. The chip 900 may include a processor 910, which may call a computer program from a memory to implement the methods as described above. This implementation is not part of the claimed invention.

In an implementation, the chip 900 may include a memory 920. The processor 910 may call a computer program from a memory 920 to implement the methods as described above. This implementation is not part of the claimed invention.

In an implementation, the memory 920 may be a device independent from the processor 710, or may be integrated in the processor 910. This implementation is not part of the claimed invention.

In an implementation, the chip 900 may further include an input interface 930. The processor 910 may control the input interface 930 to perform communication with other device or chip, for example, obtain information or data from other device or chip. This implementation is not part of the claimed invention.

In an implementation, the chip may further include an output interface 940. The processor 910 may control the input interface 930 to perform communication with other device or chip, for example, output information or data to other device or chip. This implementation is not part of the claimed invention.

In an implementation, the chip may be applied to the network device as described above. The chip may implement the process performed by the network device as described above. The specific process will not be elaborated here for simplicity. This implementation is not part of the claimed invention.

In an implementation, the chip may be applied to the terminal device as described above. The chip may implement the process performed by the terminal device as described above. The specific process will not be elaborated here for simplicity. This implementation is not part of the claimed invention.

It is to be noted that the chip mentioned here may be called a system-level chip, a system chip, a chip system or an on-chip system chip. This implementation is not part of the claimed invention.

FIG. 10 illustrates a schematic block diagram of a communication system 1000 according to some implementations of the disclosure. As illustrated in FIG. 10, the communication system includes a terminal device 1010 and a network device 1020. This implementation is not part of the claimed invention.

The terminal device 1010 may be configured to implement the functions of the terminal device as described in the above methods. The network device 1020 may be configured to implement the functions of the network device as described in the above methods. This implementation is not part of the claimed invention.

In some implementations of the disclosure, a computer readable storage medium is provided, storing a computer program. This implementation is not part of the claimed invention.

The computer program may be applied to the network device in the implementations of the disclosure, and which, when executed by a processor, causes the processor to execute the processes performed by the network device as described above. The specific process will not be elaborated here for simplicity. This implementation is not part of the claimed invention.

The computer program may be applied to the mobile terminal or terminal device in the implementations of the disclosure, and which, when executed by a processor, causes the processor to execute the processes performed by the mobile terminal or terminal device as described above. The specific process will not be elaborated here for simplicity. This implementation is not part of the claimed invention.

In some implementations of the disclosure, a computer program product is provided, including a computer program. This implementation is not part of the claimed invention.

The computer program may be applied to the network device in the implementations of the disclosure, and which, when executed by a processor, causes the processor to execute the processes performed by the network device as described above. The specific process will not be elaborated here for simplicity. This implementation is not part of the claimed invention.

The computer program may be applied to the mobile terminal or terminal device in the implementations of the disclosure, and which, when executed by a processor, causes the processor to execute the processes performed by the mobile terminal or terminal device as described above. The specific process will not be elaborated here for simplicity. This implementation is not part of the claimed invention.

In some implementations of the disclosure, a computer program is provided. This implementation is not part of the claimed invention.

The computer program may be applied to the network device in the implementations of the disclosure, and which, when executed by a processor, causes the processor to execute the processes performed by the network device as described above. The specific process will not be elaborated here for simplicity. This implementation is not part of the claimed invention.

The computer program may be applied to the mobile terminal or terminal device in the implementations of the disclosure, and which, when executed by a processor, causes the processor to execute the processes performed by the mobile terminal or terminal device as described above. The specific process will not be elaborated here for simplicity. This implementation is not part of the claimed invention.

It should be understood that, the processor mentioned here may be an integrated circuit chip having a signal processing function. The actions described in the above methods may be performed by hardware logic circuits or software instructions in the processor. The processor may be a general purpose processor, a Digital Signal Processor (DSP), an Application Specific Integrated Circuit (ASIC), a Field Programmable Gate Array (FPGA) or the like.

As people of ordinary skill in the art may appreciate, functions of the units in the apparatus as illustrated in the implementations of the disclosure can be understood based on the above relevant descriptions regarding the information transmission method, and can be implemented by programs running in a processor or by logical circuits. The functions of the units in the apparatus may be implemented by programs running in a processor or by specific logical circuits.

The abovementioned memory may include various media capable of storing program codes such as a U disk, a mobile hard disk, a Read-Only Memory (ROM), a Random Access Memory (RAM), a magnetic disk or an optical disk. As such, the implementations of the disclosure are not limited to any specific combination of software and hardware.

The implementations of the disclosure may be combined with each other freely without confliction.

In the several implementations provided in the application, it shall be understood that the disclosed systems, devices and methods may be realized in other modes. For example, the implementations of the above-described devices are only exemplary, for example, the division of the units is only a logic function division, other division modes may be adopted in practice, e.g., multiple units or components may be combined or integrated in another system, or some characteristics may be omitted or be not executed. From another point of view, the displayed or discussed mutual coupling or direct coupling or communication connection may be indirect coupling or communication connection of devices or units through some interfaces, and may also be in electrical, mechanical or other forms.

The units illustrated as separate components may be or may not be physically separated, and the components displayed as units may be or may not be physical units, that is, the components may be positioned at one place or may be distributed on multiple network units. The objective of the solution of the implementations may be fulfilled by selecting part of or all of the units according to actual needs.

In addition, in various implementations of the disclosure, the functional units may be integrated in one processing unit, or the functional units may separately and physically exist, or two or more units may be integrated in one unit. The integrated units may be implemented by hardware or by hardware plus software functional units.

## Claims

1. A method for information transmission, comprising the steps of:
receiving (401), by a distributed unit, DU, a first System Information, SI, request for a target SI transmitted from a terminal;
determining (402), by the DU, whether to deliver the target SI to the terminal based on first configuration information;
generating (403), by the DU, a first SI request response based on the determination;
transmitting (404), by the DU, the first SI request response to the terminal;
forwarding, by the DU, the first SI request to a centralized unit, CU, while transmitting the first SI request response to the terminal;
upon reception of the first SI request, transmitting, by the CU, a first indication for indicating whether to deliver the requested target SI to the terminal.

2. The method of claim 1,
wherein the first configuration information is forwarded by the CU to the DU and is used to determine which target SI can be delivered to the terminal.

3. The method of any of claims 1 to 2, wherein transmitting, by the DU, the first SI request response to the terminal (404) comprises:
during a RACH procedure, transmitting, by the DU, the first SI request response to the terminal in a second message MSG2.

4. The method of claim 1 wherein the DU is a gNB-DU configured for encoding of NR-MIB messages,
and/or,
the DU is a gNB-DU further configured for encoding of RMSI messages.

5. The method of claim 1, wherein the first SI request for the target SI is an on-demand SI request.

6. The method of claim 1, wherein the first SI request for the target SI is a MSG1-based on-demand SI request, and wherein the MSG1-based on-demand SI request uses an RACH process and Dedicated Radio Resource Control, RRC, signaling-based on-demand SI request uses RRC signaling.

7. The method of claim 1, wherein the CU is a gNB-CU which is configured for encoding of other SI messages.

8. The method of claim 1, wherein the first configuration information is synchronized from the CU.

9. An information transmission network device (600), comprising a distributed unit, DU (610) and a centralized unit, CU (620),
wherein the DU (610)is configured to receive a first System Information, SI, request for a target SI transmitted from a terminal; determine whether to deliver the target SI to the terminal based on first configuration information; ; generate a first SI request response based on the determination, transmit the first SI request response to the terminal; and forward the first SI request to the CU while transmitting the first SI request response to the terminal,
and wherein the CU (620) is configured to upon reception of the first SI request, transmit a first indication for indicating whether to deliver the requested target SI to the terminal.

10. The apparatus of claim 9,
wherein the first configuration information is forwarded by the CU (620) to the DU (610) and is used to determine which target SI can be delivered to the terminal.

11. The apparatus of any of claims 9 to 10, wherein the DU (610) is configured to, during an RACH procedure, transmit the first SI request response to the terminal in a second message MSG2.

12. The apparatus of any of claims 9 to 11, wherein the DU (610) is a gNB-DU configured for encoding of NR-MIB messages,
and/or,
the DU (610) is a gNB-DU further configured for encoding of RMSI messages.

## Patentansprüche

1. Informationsübertragungsverfahren, das die folgenden Schritte umfasst:
Empfangen (401), durch eine verteilte Einheit, DU, einer ersten Systeminformations- bzw. SI-Anforderung für von einem Endgerät übertragene Ziel-SI;
Bestimmen (402), durch die DU, ob die Ziel-SI zum Endgerät zugeführt werden sollen, basierend auf den ersten Konfigurationsinformationen;
Erzeugen (403), durch die DU, einer ersten SI-Anforderungsantwort basierend auf der Bestimmung;
Senden (404), durch die DU, der ersten SI-Anforderungsantwort an das Endgerät;
Weiterleiten, durch die DU, der ersten SI-Anforderung an eine zentralisierte Einheit, CU, während des Sendens der ersten SI-Anforderungsantwort an das Endgerät;
bei Empfang der ersten SI-Anforderung, Senden, durch die CU, einer ersten Indikation zum Anzeigen, ob die angeforderten Ziel-SI an das Endgerät gesendet werden sollen.

2. Verfahren nach Anspruch 1,
wobei die ersten Konfigurationsinformationen durch die CU an die DU weitergeleitet werden und verwendet werden, um zu bestimmen, welche Ziel-SI zum Endgerät zugeführt werden können.

3. Verfahren nach einem der Ansprüche 1 bis 2, wobei Senden, durch die DU, der ersten SI-Anforderungsantwort an das Endgerät (404) Folgendes umfasst:
während einer RACH-Prozedur, Senden, durch die DU, der ersten SI-Anforderungsantwort an das Endgerät in einer zweiten Nachricht MSG2.

4. Verfahren nach Anspruch 1, wobei die DU eine gNB-DU ist, die ausgelegt ist zum Codieren von NR-MIB-Nachrichten,
und/oder
wobei die DU eine gNB-DU ist, die ferner ausgelegt ist zum Codieren von RMSI-Nachrichten.

5. Verfahren nach Anspruch 1, wobei die erste SI-Anforderung für die Ziel-SI eine bedarfsabhängige SI-Anforderung ist.

6. Verfahren nach Anspruch 1, wobei die erste SI-Anforderung für die Ziel-SI eine MSG1-basierte bedarfsabhängige SI-Anforderung ist und wobei die MSG1-basierte bedarfsabhängige SI-Anforderung einen RACH-Prozess verwendet und eine auf dedizierter Funkressourcensteuerungs- bzw. RRC-Signalisierung basierende bedarfsabhängige SI-Anforderung RRC-Signalisierung verwendet.

7. Verfahren nach Anspruch 1, wobei die CU eine gNB-CU ist, die ausgelegt ist zum Codieren von anderen SI-Nachrichten.

8. Verfahren nach Anspruch 1, wobei die ersten Konfigurationsinformationen von der CU synchronisiert werden.

9. Informationsübertragungs-Netzwerkvorrichtung (600), umfassend eine verteilte Einheit, DU (610) und eine zentralisierte Einheit, CU (620),
wobei die DU (610) ausgelegt ist zum Empfangen einer ersten Systeminformations- bzw. SI-Anforderung für von einem Endgerät gesendete Ziel-SI; Bestimmen, ob die Ziel-SI zum Endgerät zugeführt werden soll, basierend auf ersten Konfigurationsinformationen; Erzeugen einer ersten SI-Anforderungsantwort basierend auf der Bestimmung, Senden der ersten SI-Anforderungsantwort an das Endgerät; und Weiterleiten der ersten SI-Anforderung an die CU während des Sendens der ersten SI-Anforderungsantwort an das Endgerät,
und wobei die CU (620) ausgelegt ist zum, bei Empfang der ersten SI-Anforderung, Senden einer ersten Indikation zum Anzeigen, ob die angeforderten Ziel-SI zum Endgerät zugeführt werden sollen.

10. Einrichtung nach Anspruch 9,
wobei die ersten Konfigurationsinformationen durch die CU (620) an die DU (610) weitergeleitet werden und verwendet werden, um zu bestimmen, welche Ziel-SI zum Endgerät zugeführt werden können.

11. Einrichtung nach einem der Ansprüche 9 bis 10, wobei die DU (610) ausgelegt ist zum, während einer RACH-Prozedur, Senden der ersten SI-Anforderungsantwort an das Endgerät in einer zweiten Nachricht MSG2.

12. Einrichtung nach einem der Ansprüche 9 bis 11, wobei die DU (610) eine gNB-DU ist, die ausgelegt ist zum Codieren von NR-MIB-Nachrichten,
und/oder
wobei die DU (610) eine gNB-DU ist, die ferner ausgelegt ist zum Codieren von RMSI-Nachrichten.

## Revendications

1. Procédé de transmission d'informations, comprenant les étapes suivantes :
la réception (401), par une unité distribuée, DU, d'une première demande d'informations système, SI, pour des SI cibles transmises depuis un terminal ;
la détermination (402), par la DU, de s'il convient de délivrer les SI cibles au terminal sur la base de premières informations de configuration ;
la génération (403), par la DU, d'une première réponse de demande de SI sur la base de la détermination ;
la transmission (404), par la DU, de la première réponse de demande de SI au terminal ;
le transfert, par la DU, de la première demande de SI à une unité centralisée, CU, pendant la transmission de la première réponse de demande de SI au terminal ;
suite à la réception de la première demande de SI, la transmission, par la CU, d'une première indication pour indiquer s'il convient de délivrer les SI cibles demandées au terminal.

2. Procédé selon la revendication 1,
dans lequel les premières informations de configuration sont transférées par la CU à la DU et sont utilisées pour déterminer quelles SI cibles peuvent être délivrées au terminal.

3. Procédé selon l'une quelconque des revendications 1 à 2, dans lequel la transmission, par la DU, de la première réponse de demande de SI au terminal (404) comprend :
pendant une procédure RACH, la transmission, par la DU, de la première réponse de demande de SI au terminal dans un second message MSG2.

4. Procédé selon la revendication 1, dans lequel la DU est une gNB-DU configurée pour coder des messages NR-MIB, et/ou
la DU est une gNB-DU configurée en outre pour coder des messages RMSI.

5. Procédé selon la revendication 1, dans lequel la première demande de SI pour les SI cibles est une demande de SI à la demande.

6. Procédé selon la revendication 1, dans lequel la première demande de SI pour les SI cibles est une demande de SI à la demande basée sur MSG1, et dans lequel la demande de SI à la demande basée sur MSG1 utilise un processus RACH et une commande de ressource radio dédiée, RRC, la demande de SI à la demande basée sur une signalisation utilise une signalisation RRC.

7. Procédé selon la revendication 1, dans lequel la CU est une gNB-CU qui est configurée pour coder d'autres messages SI.

8. Procédé selon la revendication 1, dans lequel les premières informations de configuration sont synchronisées depuis la CU.

9. Dispositif de réseau de transmission d'informations (600), comprenant une unité distribuée, DU (610) et une unité centralisée, CU (620),
dans lequel la DU (610) est configurée pour recevoir une première demande d'informations système, SI, pour des SI cibles transmises depuis un terminal ; déterminer s'il convient de délivrer les SI cibles au terminal sur la base de premières informations de configuration ; générer une première réponse de demande de SI sur la base de la détermination, transmettre la première réponse de demande de SI au terminal ; et transférer la première demande de SI à la CU tout en transmettant la première réponse de demande de SI au terminal,
et dans lequel la CU (620) est configurée pour, suite à la réception de la première demande de SI, transmettre une première indication pour indiquer s'il convient de délivrer les SI cibles demandées au terminal.

10. Appareil selon la revendication 9,
dans lequel les premières informations de configuration sont transférées par la CU (620) à la DU (610) et sont utilisées pour déterminer quelles SI cibles peuvent être délivrées au terminal.

11. Appareil selon l'une quelconque des revendications 9 à 10, dans lequel la DU (610) est configurée pour, pendant une procédure RACH, transmettre la première réponse de demande de SI au terminal dans un second message MSG2.

12. Appareil selon l'une quelconque des revendications 9 à 11, dans lequel la DU (610) est une gNB-DU configurée pour coder des messages NR-MIB, et/ou
la DU (610) est une gNB-DU configurée en outre pour coder des messages RMSI.
